# EUROPÄISCHE PATENTANMELDUNG

(11) **EP 0 776 080 A2**
(43) Veröffentlichungstag der Anmeldung: **28.05.1997**
(21) Anmeldenummer: 97101972.4
(22) Anmeldetag: 07.02.1997
(51) Int. Cl.: H02J 7/00

(54) **Vorrichtung zur Energieversorgung von Systemeinheiten**

(71) Anmelder: ITC Technology GmbH, 6301 Zug (CH)
(72) Erfinder: Wyss, Patrick, 4656 Starrkirch (CH); Fessler, Anton, 5610 Wohlen (CH); Meyer, Christian, 4705 Walliswil-Bipp (CH)
(74) Vertreter: Troesch Scheidegger Werner AG

(57) **Zusammenfassung**

Die Erfindung betrifft eine Vorrichtung zur Versorgung von Systemeinheiten, insbesondere von Akkumulatoren und elektrischen Schaltkreisen, mit elektrischer Energie, wobei die erfindungsgemässe Vorrichtung ein Netzmodul (NT) und mindestens ein das Netzmodul (NT) steuerndes Steuerlogikmodul (SL) aufweist, wobei das Netzmodul (NT) über mindestens einen Anschluss (SAN, LAN) mit dem mindestens einen Steuerlogikmodul (SL) verbindbar ist. Ferner weist mindestens eines der Steuerlogikmodule (SL) mindestens eine Koppelstelle zum Anschliessen der Systemeinheiten auf.
Die erfindungsgemässe Vorrichtung kann als Netzgerät zur Versorgung von elektronischen Schaltkreisen mit gewünschten Niederspannungen oder als Ladegerät zum Aufladen von Akkumulatoren verwendet werden. Dabei ist besonders die modulartige Aufbauweise von grossem Vorteil, da eine Anpassung an neue Bedingungen äusserst einfach und kostengünstig vorgenommen werden kann.

## Beschreibung

Die vorliegende Erfindung betrifft eine Vorrichtung nach dem Oberbegriff des Patentanspruchs 1 sowie Verwendungen derselben.

Spannungs- und Stromquellen werden bei allen elektronischen Geräten zur Versorgung derer Komponenten mit elektrischer Energie benötigt. Solche Spannungs- und Stromquellen sind unter dem allgemeinen Begriff Netzgeräte bekannt. Neben der direkten Energieversorgung der elektronischen Komponenten wird häufig auch eine Energiezwischenspeicherung in einem Akkumulator bzw. in einer ladbaren Batterie vorgenommen, damit diese Geräte netzunabhängig eingesetzt werden können. Zum Aufladen von ladbaren Batterien bzw. Akkumulatoren werden mit solchen Spannungs- und Stromquellen versehene Ladegeräte verwendet, die jeweils derart weiter ausgestaltet sind, dass die zu ladenden Akkumulatoren formschlüssig im jeweiligen Ladegerät aufgenommen werden können. Neben einer formschlüssigen Ausgestaltung sind die Ladegeräte darüber hinaus auf eine für die Akkumulatoren spezifische elektrische Nennspannung ausgelegt.

Ein derartiges Ladegerät ist beispielsweise in der europäischen Patentanmeldung EP-0 692 859 beschrieben. Mit diesem bekannten Ladegerät können Akkumulatoren aufgeladen werden, die unterschiedliche Nennspannungen aufweisen und zwar insbesondere auch dann, wenn die entsprechende Nennspannung nicht im voraus dem Ladegerät bekannt ist bzw. nicht auf irgend eine Weise eingegeben wird. Damit wurde eine hohe Flexibilität in bezug auf die Nennspannung erreicht. Voraussetzung ist allerdings, dass die die verschiedenen Nennspannungen aufweisenden Akkumulatoren die gleiche äussere Form aufweisen, denn nur dann können die entsprechenden Akkumulatoren in diesem bekannten Ladegerät aufgenommen werden. Damit muss das Ladegerät gewechselt werden, sobald Akkumulatoren aufgeladen werden sollen, die nicht dieselbe äussere Form aufweisen wie diejenige, für die das Ladegerät ursprünglich konzipiert wurde.

Wie erwähnt zeichnet sich das bekannte Ladegerät insbesondere dadurch aus, dass die erforderliche Nennspannung des zu ladenden Akkumulators selbständig bestimmt wird, und zwar indem die Nennspannung während dem Ladevorgang dauernd überwacht wird. Somit wird bei diesem bekannten Ladeverfahren zunächst aufgrund einer zu Beginn des Ladeverfahrens gemessenen Spannung am Ausgang des Akkumulators auf eine Nennspannung geschlossen, die nicht unbedingt der tatsächlichen Nennspannung des Akkumulators entspricht, denn die momentane Ausgangsspannung eines Akkumulators ist sehr stark vom Ladezustand des Akkumulators abhängig. Damit ist denkbar, dass beim bekannten Ladeverfahren zunächst von einer falschen Nennspannung ausgegangen wird, womit der Ladevorgang zunächst lediglich suboptimal durchgeführt wird.

Andererseits sind Netzgeräte, mit denen die direkte Energieversorgung von Systemeinheiten vorgenommen wird, durchwegs auf einen vorgegebenen Leistungsbereich ausgelegt, der nur mit relativ grossem Änderungsaufwand an der Hardware verändert werden kann.

Der vorliegenden Erfindung liegt daher die Aufgabe zugrunde, eine Vorrichtung, insbesondere in der Art eines Ladegerätes und eines Netzgerätes, anzugeben, das obenerwähnte Nachteile nicht aufweist.

Diese Aufgabe wird durch die im kennzeichnenden Teil des Patentanspruchs 1 angegebenen Massnahmen gelöst. Vorteilhafte Ausgestaltungen der Erfindung sowie Verwendungen sind in weiteren Ansprüchen angegeben.

Die erfindungsgemässe Vorrichtung ist durch die modulartige Aufbauweise und die programmierbare Steuerung äusserst flexibel und somit schnell an neu gestellte Aufgaben anpassbar.
Dabei erweist sich das Unterbringen der verwendeten Leistungskomponenten im Netzmodul und der Logikkomponenten in das Steuerlogikmodul als überaus günstig, sind doch dadurch verkürzte oder keine Zulassungsverfahren bei für die Sicherheit elektronischer Apparate zuständigen Behörden erforderlich, wenn neue Kenndaten der erfindungsgemässen Vorrichtung angestrebt oder wenn neue Verfahren in diesen zur Anwendung gelangen sollen.

Die Erfindung wird nachfolgend anhand von Zeichnungen beispielsweise näher erläutert. Dabei zeigen
- Fig. 1: einen prinzipiellen Aufbau einer erfindungsgemässen Vorrichtung,
- Fig. 2: eine mögliche Realisierungsform eines zur erfindungsgemässen Vorrichtung gehörenden Netzmoduls,
- Fig. 3: ein in das Netzmodul gemäss Fig. 2 einschiebbares Steuerlogikmodul,
- Fig. 4: einen in das Steuerlogikmodul gemäss Fig. 3 einschiebbaren Akkumulator,
- Fig. 5: ein weiteres, in das Netzmodul gemäss Fig. 2 einschiebbares Steuerlogikmodul,
- Fig. 6 bis 8: weitere Ausführungsformen der erfindungsgemässen Vorrichtung und
- Fig. 9: eine prinzipielle Schaltungsanordnung im Akkumulator.

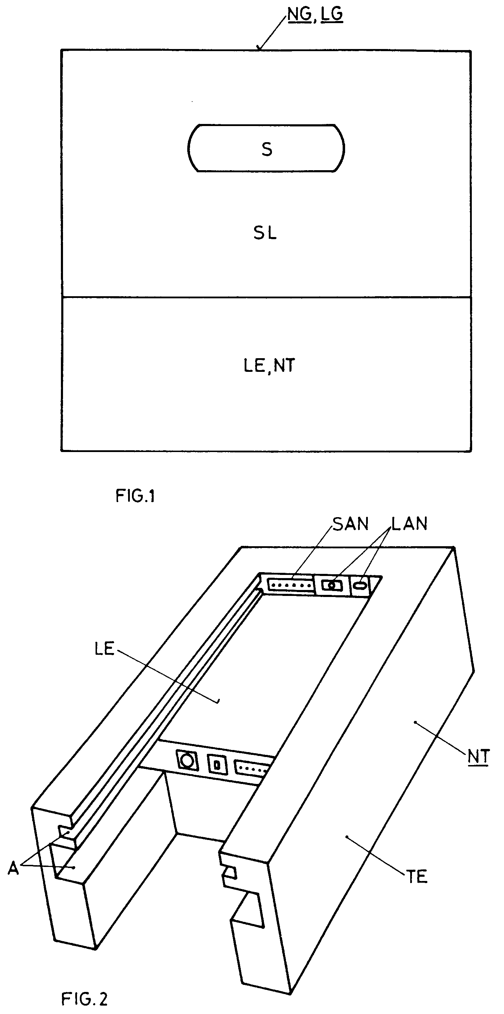

In Fig. 1 sind schematisch die einzelnen Module einer zur Energieversorgung von Systemeinheiten vorgesehenen erfindungsgemässen Vorrichtung dargestellt, die als Ladegerät LG oder Netzgerät NG eingesetzt werden kann, wobei diese Vorrichtung aus einem Netzmodul NT bzw. einer Leistungseinheit LE und aus einem Steuerlogikmodul SL besteht. Das letztgenannte Modul weist eine Koppelstelle S auf, über die ein Adapter (in Fig. 1 nicht dargestellt) mit dem Steuerlogikmodul SL verbunden werden kann. Was die Realisierung des Steuerlogikmoduls SL und des Netzmoduls NT bei einem Ladegerät LG anbelangt, sei auf die Ausführungen der erwähnten europäischen Patentanmeldung EP-0 692 859 verwiesen. In dieser Druckschrift, deren Offenbarungsgehalt ausdrücklich als zum Offenbarungsgehalt dieser Anmeldung gehörend betrachtet wird, sind die jeweiligen Module und insbesondere die in diesen ablaufenden Ladeverfahren ausführlich beschrieben.

Die Koppelstelle S ist bei einer als Ladegerät LG arbeitenden erfindungsgemässen Vorrichtung zur Aufnahme eines noch zu erläuternden Adapters vorzugsweise als Schacht ausgebildet. Der Adapter wird als eigentliches Zwischenglied zwischen der aufzuladenden Batterie bzw. dem Akkumulator und dem Ladegerät LG als ganzes - d.h. bestehend aus Steuerlogikmodul SL und Netzmodul NT - benötigt, wobei der Akkumulator in den Adapter und dieser in den Schacht zur Verbindung mit der Koppelstelle S geschoben wird. Die Form des Adapters wird auf der dem Akkumulator zugewandte Seite der äusseren Form des jeweils aufzuladenden Akkumulators angepasst, währenddem die den Adapter aufnehmende Form des Schachtes unveränderlich derjenigen des Adapters auf seiner Aussenseite entspricht. Damit ist das erfindungsgemässe Ladegerät universell in dem Sinne einsetzbar, indem zum Aufladen von unterschiedlichen Akkumulatortypen lediglich die Adapterform angepasst werden muss, währenddem das Ladegerät prinzipiell unverändert bleibt. Dies ist insbesondere bei der Verwendung eines Ladegerätes der in EP-0 692 859 beschriebenen Art vorteilhaft, denn ein solches Ladegerät steuert den Ladevorgang in optimaler Weise abhängig von der gemessenen Nennspannung und der für den Akkumulator charakteristischen Kapazität.

In einer weiteren Ausführungsform der Erfindung sind mehrere Koppelstellen S vorgesehen, in die je ein Adapter einschiebbar ist. Denkbar ist jedoch auch eine Koppelstelle S, die mehrere Adapter aufnehmen kann.

In einer bevorzugten Ausführungsform ist zumindest das Steuerlogikmodul SL mittels Dickfilmtechnologie realisiert.

In einer vereinfachten Ausführungsform ist vorgesehen, das der Adapter zur Aufnahme eines zu ladenden Akkumulators fix in das Steuerlogikmodul SL integriert ist. Damit ist jedoch bei einer Anpassung an eine neue Akkumulatorform nicht nur der Adapter sondern auch das ganze Steuerlogikmodul SL entsprechend zu ändern bzw. anzupassen.

Schliesslich ist die erfindungsgemässe Vorrichtung, sei sie als Ladegerät oder sei sie als Netzgerät konzipiert, modulartig aufgebaut. So ist das Netzmodul NT, das Steuerlogikmodul SL und allenfalls auch - wie bereits erwähnt - der Adapter einfach in eine im Ladegerät LG vorgesehene Ausnehmung einschiebbar. Damit lässt sich eine Anpassung an andere Leistungsparameter auf einfache Art bewerkstelligen, nämlich eben dadurch, dass durch einfaches Auswechseln des jeweiligen Moduls neue Kenndaten erreicht werden. Dieses Prinzip wird anhand einer konkreten Realisierungsform, wie sie in der Fig. 2 bis 5 dargestellt ist, weiter erläutert werden.

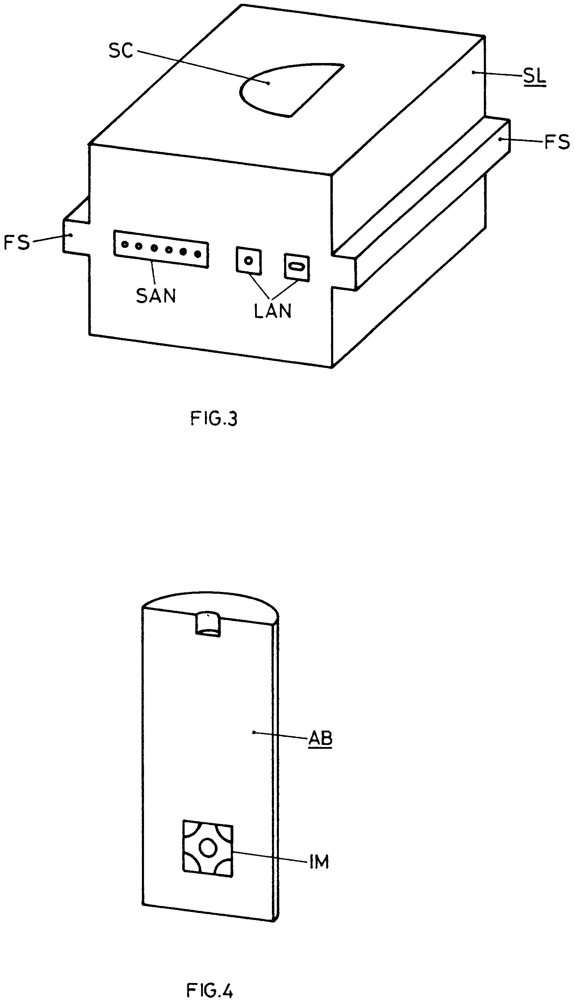

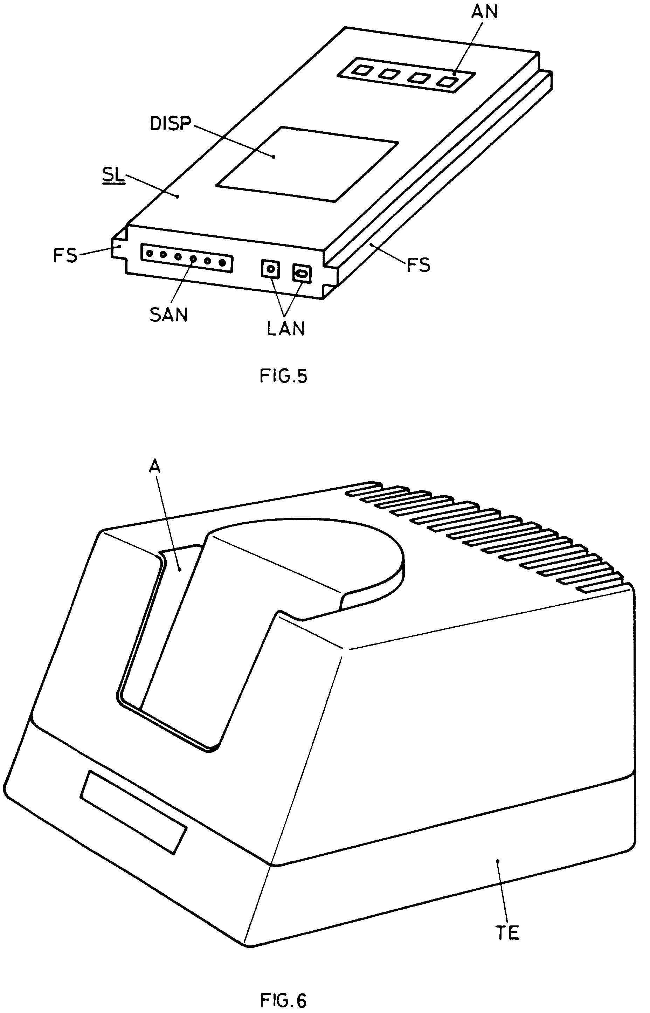

So ist in Fig. 2 ein erfindungsgemässes Netzmodul NT dargestellt, das eine U-förmige Trägereinheit TE, enthaltend eine Leistungseinheit LE, aufweist, wobei sowohl im Trägerteil TE als auch im Leistungsteil LE Steueranschlüsse SAN und/oder Leistungsanschlüsse LAN vorgesehen sind. Jeweils auf der Innenseite der U-förmigen Trägereinheit TE sind schienenförmige Ausnehmungen A vorhanden, die zum Aufnehmen von Steuerlogikmodulen SL gemäss den folgenden Ausführungen zu den Figuren 3 und 5 vorgesehen sind.

Bei der bereits anhand Fig. 1 erläuterten Modulanordnung erweist sich eine Anordnung der verwendeten Leistungskomponenten im Netzmodul NT und der verwendeten logischen Komponenten im Steuerlogikmodul SL (Fig. 1) als besonders vorteilhaft, denn dadurch wird erreicht, dass eine für die Speisung des Ladegerätes LG notwendige Versorgungsspannung, die beispielsweise in Europa 220 Volt beträgt, lediglich im Netzmodul NT, bestehend aus Trägereinheit TE und Leistungseinheit LE, vorhanden sein muss, wobei die zum Aufladen der Akkumulatoren benötigten Niederspannungswerte in diesem Netzmodul NT erzeugt werden. Da diese Niederspannungswerte durchwegs in Bereichen liegen, in denen keine speziellen Sicherheitsvorkehrungen in bezug auf Stromschlag getroffen werden müssen, unterstehen die an das Netzmodul NT anschliessbaren Steuerlogikmodule SL bzw. Adapter, an die die Niederspannungswerte übertragen werden, keiner Prüfungspflicht in bezug auf ausreichende elektrische Sicherheitsvorkehrungen. Dies bedeutet, dass lediglich das Netzmodul NT einer diesbezüglichen Prüfungspflicht untersteht. Daraus resultiert - unter Berücksichtigung der weiteren Merkmale der Steuermodule bzw. Adapter - ein wesentlich kostengünstigeres Ladegerät bzw. Netzgerät, denn solche Prüfungsverfahren verteuern neue Produkte in nicht unerheblichem Masse. Darüber hinaus kann die erfindungsgemässe Vorrichtung rasch an neue Anforderungen, beispielsweise an einen neuen Akkumulatortyp, angepasst werden, ohne dass ein neues Prüfungsverfahren durchgeführt werden muss, denn in einem solchen Fall ist lediglich das prüfungsfreie Steuerlogikmodul SL anzupassen. Gleichermassen ist lediglich das Steuerlogikmodul SL zu ändern, wenn beispielsweise das Ladeverfahren bei einer als Ladegerät für Akkumulatoren arbeitenden erfindungsgemässen Vorrichtung optimiert, d.h. geändert werden soll.

Als Schnittstelle zwischen dem Netzmodul NT bzw. der Leistungseinheit LE und dem Steuerlogikmodul SL sind die erwähnten Steuer- und Leistungsanschlüsse SAN bzw. LAN vorgesehen, wobei über die Steueranschlüsse SAN die im Steuerlogikmodul SL erzeugten Steuersignale für die Steuerung der in der Leistungseinheit LE vorhandenen Leistungskomponenten übertragen werden und wobei über die Leistungsanschlüsse LAN die in der Leistungseinheit LE erzeugten Spannung- und/oder Stromwerte zur Abgabe am Steuerlogikmodul SL, beispielsweise über einen Adapter an einen aufzuladenden Akkumulator, übertragen werden. Währenddem es sich bei den Steuersignalen, wie allgemein üblich, um logische Signale handelt, die meist geringe Spannungs- und Stromwerte aufweisen, weisen die über die Leistungsanschlüsse LAN übertragenen Signale vorzugsweise Spannungswerte im Bereich kleiner als 50 Volt und Stromwerte im Bereich von einigen Ampère auf. Die maximal zulässigen Werte, bei denen keine Zulassungsprüfung erforderlich ist, richten sich nach den Richtlinien, die ein Staat, in dem die erfindungsgemässen Produkte verkauft werden, erlassen hat. Mit Vorteil werden die jeweiligen Steuerlogikmodule SL derart ausgelegt, dass keine Zulassungsprüfung für diese erforderlich ist.

Bei der in Fig. 2 dargestellten Realisierung des Netzmoduls NT ist vorgesehen, dass zwei Steuerlogikmodule SL eingeschoben werden. Denkbar sind jedoch - bei entsprechender Erweiterung des Netzmoduls NT mit zusätzlichen Steuer- und Leistungsanschlüssen SAN bzw. LAN - auch mehr als zwei Steuerlogikmodule SL und/oder auch mehrere Netzmodule NT in der gleichen Trägereinheit TE.

In Fig. 3 ist ein zum Netzmodul NT von Fig. 2 passendes Steuerlogikmodul SL mit Führungsschienen FS, einem Schacht SC und den Steuer- SAN und Leistungsanschlüssen LAN dargestellt, wobei dieses Steuerlogikmodul SL als Teil eines Ladegerätes für einen Akkumulator konzipiert ist, der zum Aufladen in den Schacht SC geschoben wird. Beim Einschieben des Steuerlogikmoduls SL in die in Fig. 2 dargestellte Trägereinheit TE greifen die Führungsschienen FS in die Ausnehmungen A der Trägereinheit TE (Fig. 2) ein, wobei nach vollständigem Einschieben die Steuer- und Logikanschlüsse SAN bzw. LAN des Steuerlogikmoduls SL mit denjenigen der Trägereinheit TE verbunden werden.

Bei dem in Fig. 3 dargestellten Steuerlogikmodul SL wird sowohl die elektronische Signalaufbereitung für die in der Leistungseinheit LE benötigten Steuersignale vorgenommen als auch die formmässige Anpassung an den zu ladenden Akkumulator, was gemäss den Ausführungen zu Fig. 1 ansonsten ein speziell dafür vorgesehener Adapter vornimmt. Denkbar ist jedoch auch, dass in den Schacht SC nicht direkt der aufzuladende Akkumulator eingeschoben wird, sondern zunächst ein Adapter, in den schliesslich der Akkumulator eingeschoben wird.

Fig. 4 zeigt einen Akkumulator AB, der direkt in das in Fig. 3 dargestellte Steuerlogikmodul SL bzw. in dessen Schacht SC einschiebbar ist. Der Akkumulator AB weist neben den zur Energieübertragung vorgesehenen Kontakten Identifikationsmittel IM in Form eines integrierten Schaltkreises mit einem Speicher auf. In diesem Schaltkreis sind insbesondere technische Daten des Akkumulators - wie beispielsweise maximale Ladekapazität, Herstellungsdatum, Anzahl Ladungen, etc. - gespeichert, aufgrund derer im Steuerlogikmodul SL (Fig. 3) für den jeweiligen Akkumulator AB ein optimales Ladeverfahren eingestellt bzw. ausgewählt werden kann.

Der erwähnte integrierte Schaltkreis ist zwar das bevorzugte Identifikationsmittel IM auf dem Akkumulator AB. Denkbar sind jedoch auch einfachere Ausführungen wie beispielsweise ein auf dem Akkumulator AB vorhandener Schwingkreis mit einer Resonanzfrequenz, die charakteristisch für die maximale Kapazität des Akkumulators AB ist, oder ein auf dem Akkumulator AB aufgebrachter Widerstand, der einen für den entsprechenden Akkumulatortyp charakteristischen Widerstandswert aufweist.

In Fig. 5 ist ein weiteres Steuerlogikmodul SL dargestellt, das ebenfalls in die in Fig. 2 gezeigte Trägereinheit TE - und zwar in der oberen Position derselben - eingeschoben werden kann. Neben den Steuer- und Leistungsanschlüssen SAN bzw. LAN weist dieses Steuerlogikmodul SL zudem eine Anzeige DISP auf, auf dem beispielsweise Informationen über den Ladezustand - d.h. Ladekapazität, Ladespannung, etc. - eines mit den Anschlüssen AN verbundenen Akkumulators angezeigt werden können.

Eine weitere Ausführungsform eines Steuerlogikmoduls weist ferner Mittel zum Aufnehmen und Lesen von sogenannten Chipkarten auf, in denen beispielsweise andere Ladeverfahren für Akkumulatoren gespeichert sind, als diejenige, die in einem fix installierten, zum Steuerlogikmodul gehörenden Speicher abgelegt sind. Damit wird die Flexibilität der erfindungsgemässen Vorrichtung weiter erhöht, denn damit lassen sich Anpassungen an neue Akkumulatoren - sofern als Ladegerät verwendet - oder Anpassungen an neue Spannungswerte - sofern als Netzgerät verwendet - leicht bewerkstelligen, ohne dass Hardware-Anpassungen notwendig sind.

Denkbar ist auch die Verwendung eines Steuerlogikmoduls allein, d.h. ohne Netzmodul. Die Energieversorgung wird in diesem Fall dadurch vorgenommen, dass eine Niederspannung, beispielsweise von einer Autobatterie, direkt dem Steuerlogikmodul zugeführt wird. Voraussetzung ist dann allerdings, dass auch im Steuerlogikmodul Leistungskomponenten - allerdings lediglich für niedrige Leistungen - zur Spannungs- und/oder Stromwandlung vorhanden sind, damit die gewünschten Spannungen und Ströme erzeugt bzw. das entsprechenden Ladeverfahren eingesetzt werden kann.

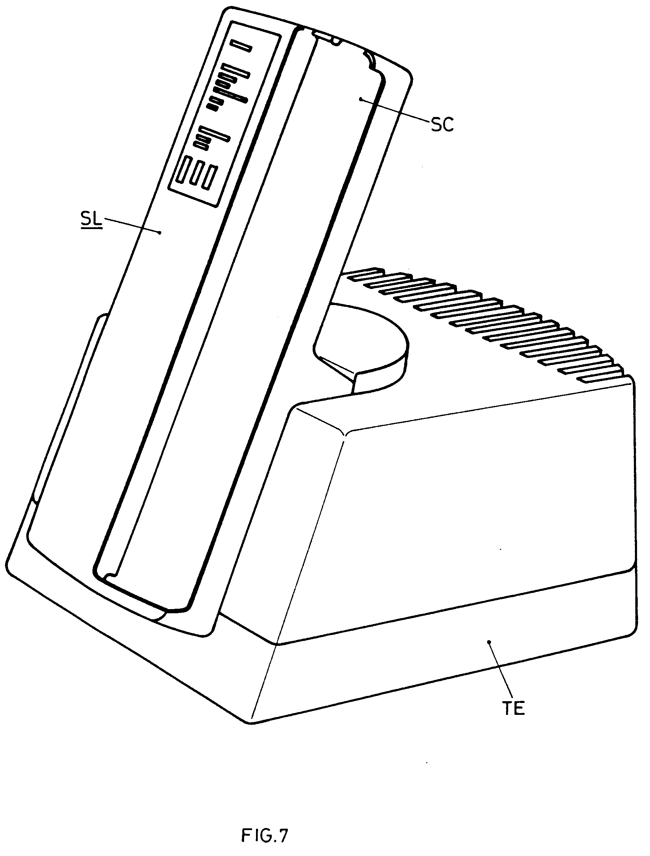

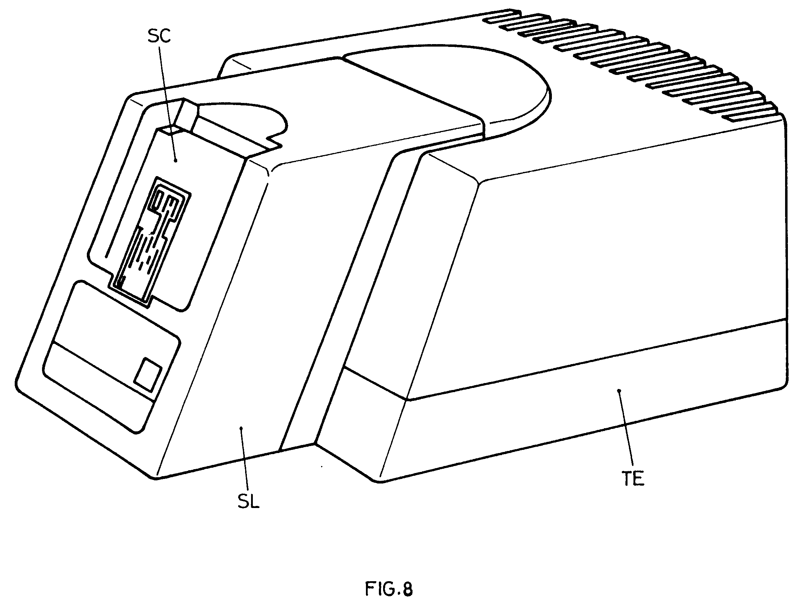

In den Fig. 6 bis 8 sind weitere Ausführungsformen der erfindungsgemässen Vorrichtung dargestellt.

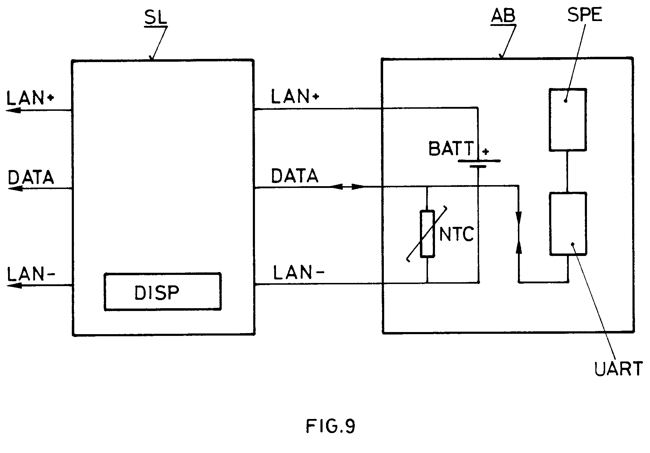

Fig. 9 zeigt eine prinzipielle Schaltungsanordnung in einem Akkumulator AB im Zusammenhang mit dem Steuerlogikmodul SL. Diese Ausführungsform knüpft an die anhand der Fig. 4 und 5 erläuterten Ausführungsformen an, wobei eine mögliche Anordnung der Identifikationsmittel IM (Fig. 4) und weiterer Schaltungselemente ersichtlich sind. So weist der Akkumulator AB gemäss Fig. 9 neben der eigentlichen Energiespeichereinheit BATT eine Speichereinheit SPE, eine Kommunikationseinheit UART und einen NTC-Widerstand NTC auf. Das in Fig. 9 ebenfalls dargestellte Steuerlogikmodul SL weist neben den bereits anhand Fig. 1 und 2 erläuterten Leistungsanschlüssen LAN, bestehend aus den zwei Anschlüssen LAN- und LAN+, und den Steueranschlüssen SAN, bestehend aus der Datenleitung DATA, eine Anzeige DISP auf, wobei die elektrischen Signale auf der Datenleitung DATA in bezug auf das Potential des Leistungsanschlusses LAN-definiert sind. Der NTC-Widerstand ist auf der Seite des Akkumulators AB zwischen der Datenleitung DATA und dem Leistungsanschluss LAN- geschaltet. Gleichzeitig ist die Datenleitung DATA zur Kommunikationseinheit UART geführt, die ihrerseits mit der Speichereinheit SPE verbunden ist. Schliesslich ist die Energiespeichereinheit BATT an die Leistungsanschlüsse LAN+ und LAN- angeschlossen.

Im folgenden wird die Funktionsweise und die Einsatzmöglichkeiten der obenerwähnten Schaltungsanordnung erläutert:

Wie bereits erwähnt können die Ladeverfahren zum Aufladen von Akkumulatoren erheblich verbessert werden, wenn Kenndaten - wie beispielsweise Kapazität, Alter, Anzahl durchgeführter Ladevorgänge, etc. - der zu ladenden Akkumulatoren vor dem Ladebeginn bekannt sind, denn in Kenntnis solcher Parameter können die Ladevorgänge optimal eingestellt werden. Neben diesen akkumulatorspezifischen Kenndaten sind jedoch auch momentane Parameter - wie beispielsweise die im Akkumulator vorhandene momentane Temperatur - von grösster Bedeutung.

Die Ausführungsform gemäss Fig. 9 zeichnet sich dadurch aus, dass die akkumulatorspezifischen Kenndaten in der Speichereinheit SPE gespeichert sind und somit von dieser gelesen werden können. Ist die Speichereinheit SPE als EEPROM-(Electrical Erasable Programmable Read-only Memory) konzipiert, so können die Kenndaten zudem geändert bzw. ergänzt werden. Für die Ablaufsteuerung beim Lesen bzw. beim Beschreiben der Speichereinheit SPE ist die Kommunikationeinheit UART vorgesehen, die die über die Datenleitung DATA seriell übertragenen Daten in einen parallelen Datenstrom, der von der Speichereinheit SPE aufgenommen werden kann, wandelt. Damit weist diese Ausführungsform den Vorteil auf, dass neben den beiden Leistungsanschlüssen LAN+ und LAN- lediglich eine Datenleitung DATA zwischen dem Akkumulator AB und dem Steuerlogikmodul SL vorhanden sein muss.

Die Datenleitung DATA wird darüber hinaus auch noch zur Übertragung der während dem Ladevorgang im Akkumulator AB herrschenden momentanen Temperatur verwendet. Dies ist möglich, da akkumulatorspezifische Kenndaten meist nur vor oder nach dem Ladevorgang an das Steuerlogikmodul SL übertragen werden müssen. Somit ist die Datenleitung DATA während dem Ladevorgang zur Übertragung von anderen Informationen verwendbar. Eine mögliche Verwendung zur Übermittlung der Temperatur besteht in der erwähnten Schaltungsanordnung mit dem NTC-Widerstand NTC. Dazu wird der Ausgang der Kommunikationseinheit UART hochohmig geschaltet, sobald keine Daten mehr zwischen der Speichereinheit SPE und dem Steuerlogikmodul SL übertragen werden müssen. Somit wird die sich zwischen der Datenleitung DATA und dem Leistungsanschluss LAN- auf der Seite des Steuerlogikmoduls SL anstehenden Spannung proportional zum Wert des Widerstandes NTC einstellen. Bei Verwendung eines NTC-(Negative Temperature Coefficient)-Widerstandes ist die momentan gemessene Spannung somit umgekehrt proportional zur momentanen Temperatur.

Aus Fig. 9 nicht ersichtlich ist, dass die im Akkumulator AB vorhandenen Logikschaltkreise vorzugsweise durch die Energiespeichereinheit BATT mit Energie versorgt werden.

Bei der erwähnten Kommunikationseinheit UART handelt es sich im wesentlichen um einen Wandler, der den ankommenden bzw. den abgehenden seriellen Datenstrom in einen parallelen Datenstrom wandelt. Allerdings werden in dieser Einheit auch sämtliche Steuer-, Takt- und Synchronsignale generiert. Solche Kommunikationeinheiten sind unter dem Akronym UART-(Universal Asynchronous Receiver Transceiver) allgemein bekannt, weshalb an dieser Stelle keine weiteren Ausführungen dazu notwendig sind.

## Patentansprüche

1. Vorrichtung zur Energieversorgung von Systemeinheiten (AB), insbesondere von Akkumulatoren oder von elektrischen Geräten, dadurch gekennzeichnet, dass ein mit einem Energieversorgungsnetz verbindbares Netzmodul (NT) und mindestens ein das Netzmodul (NT) steuerndes Steuerlogikmodul (SL) vorgesehen sind, wobei das Netzmodul (NT) über mindestens einen Anschluss (SAN, LAN) mit dem mindestens einen Steuerlogikmodul (SL) verbindbar ist, und dass an mindestens einem der Steuerlogikmodule (SL) mindestens eine Koppelstelle (S) zum Anschliessen mindestens einer Systemeinheit (AB) vorgesehen ist.

2. Vorrichtung nach Anspruch 1, dadurch gekennzeichnet, dass mindestens ein Steuerlogikmodul (SL), vorzugsweise mit Hilfe einer Chipkarte, programmierbar ist.

3. Vorrichtung nach Anspruch 1 oder 2, dadurch gekennzeichnet, dass mindestens eine Systemeinheit (AB) über einen Adapter mit der Koppelstelle (S) des entsprechenden Steuerlogikmoduls (SL) lösbar verbindbar ist, wobei der Adapter eine elektrische und/oder eine formmässige Kopplung ermöglicht.

4. Vorrichtung nach Anspruch 3, dadurch gekennzeichnet, dass die Koppelstelle (S) auf der Seite des Steuerlogikmoduls (SL) als Schacht (SC) ausgebildet ist, der mindestens einen Adapter und/oder eine Systemeinheit (AB) aufnimmt.

5. Vorrichtung nach einem der vorangehenden Ansprüche, dadurch gekennzeichnet, dass zumindest ein Modul (NT, SL), vorzugsweise das Steuerlogikmodul (SL), mittels Dickfilmschaltungstechnik realisiert ist.

6. Vorrichtung nach einem der vorangehenden Ansprüche, dadurch gekennzeichnet, dass im Netzmodul (NT) sämtliche Leistungskomponenten enthalten sind.

7. Vorrichtung nach einem der vorangehenden Ansprüche, dadurch gekennzeichnet, dass im Steuerlogikmodul (SL) alle Komponenten, die zur Generierung der Steuerimpulse für das Netzmodul (NT) benötigt werden, enthalten sind.

8. Vorrichtung nach einem der vorangehenden Ansprüche, dadurch gekennzeichnet, dass auf den Systemeinheiten (AB) Identifikationsmittel (IM) zur Identifikation der jeweiligen Systemeinheit (AB) vorgesehen sind.

9. Vorrichtung nach Anspruch 8, dadurch gekennzeichnet, dass ein integrierter Schaltkreis mit Speicherfunktion als Identifikationsmittel (IM) vorgesehen ist.

10. Vorrichtung nach Anspruch 9, dadurch gekennzeichnet, dass eine Kommunikationseinheit (UART) zur seriellen Datenübertragung zwischen dem Steuerlogikmodul (SL) und dem Akkumulator (AB) vorgesehen ist.

11. Vorrichtung nach Anspruch 8, dadurch gekennzeichnet, dass ein Schwingkreis oder mindestens ein Widerstand als Identifikationsmittel (IM) vorgesehen ist.

12. Vorrichtung nach einem der vorangehenden Ansprüche, dadurch gekennzeichnet, dass das Netzmodul (NT) aus einer Leistungseinheit (LE) und einer Trägereinheit (TE) besteht, in die die Steuerlogikmodule (SL) einschiebbar sind.

13. Vorrichtung nach Anspruch 12, dadurch gekennzeichnet, dass die Trägereinheit (TE) U-förmig ist.

14. Vorrichtung nach einem der vorangehenden Ansprüche, dadurch gekennzeichnet, dass das mindestens eine der Steuerlogikmodule (SL) eine Anzeigevorrichtung (DISP) aufweist.

15. Vorrichtung nach einem der vorangehenden Ansprüche, dadurch gekennzeichnet, dass Mittel (NTC) zum Bestimmen der Temperatur des Akkumulators (AB) vorgesehen sind.

16. Verwendung der Vorrichtung nach einem der Ansprüche 1 bis 15 als Ladegerät zum Laden von ladbaren Batterien bzw. Akkumulatoren (AB).

17. Verwendung der Vorrichtung nach Anspruch 1 als elektrische Spannungs- und/oder Stromquelle.
